# EUROPEAN PATENT APPLICATION

(11) **EP 1 772 867 A2**
(43) Date of publication of application: **11.04.2007**
(21) Application number: 07100425.3
(22) Date of filing: 03.07.2003
(51) Int. Cl.: G11B 20/10, G11B 27/10, G11B 27/11, G11B 27/32, G11B 27/34, H04N 9/82

(54) **A method to display a mark-up document according to a parental level, method and apparatus to reproduce the mark-up document in an interactive mode, and a data storage medium therefor**

(30) Priority: 05.07.2002 KR 20020038880; 04.01.2003 KR 20030000436
(62) Divisional of application: 03738734.7
(71) Applicant: SAMSUNG ELECTRONICS CO., LTD., Suwon-si, Gyeonggi-do (KR)
(72) Inventor: Jung, Kil-Soo, Hwaseong-gun, Gyeonggi-do 445-970 (KR); Park, Sung-Wook, Seoul 121-022 (KR); Chung, Hyun-Kwon, Seoul 135-120 (KR)
(74) Representative: Robinson, Ian Michael

(57) **Abstract**

Provided are a method to display a mark-up document according to a parental level, a method and an apparatus for reproducing AV data in an interactive mode, and a data storage medium (300). The data storage medium (300) includes the AV data, and mark-up documents to reproduce the AV data in an interactive mode. Here, among the mark-up documents, a start-up document contains information on the mark-up documents to be displayed according to a set parental level.

## Description

### Technical Field

The present invention relates to a method and an apparatus for reproducing a mark-up document according to a parental level, and a data storage medium.

### Background Art

Digital versatile disks (DVD) that enable AV data recorded thereon to be reproduced in an interactive mode in a PC-based environment, i.e., interactive DVDs, are being sold in the market place. On the interactive DVD, the AV data is recorded according to conventional DVD-video standards, and a mark-up document for supporting interactive functions is further recorded. The AV data recorded on the interactive DVD can be displayed in two different modes. One way to display the AV data is a video mode, which is the same as a conventional DVD-video mode, i.e., the way AV data recorded on a typical DVD is displayed, and the other is an interactive mode in which an AV screen on which the AV data reproduced from the interactive DVD and displayed together with an embedded mark-up document. For example, in a case where the AV data is a movie title, moving images are displayed in a display window of a screen, and various interactive contents including a film script, a synopsis, and actors and actresses' photos, can be displayed on the rest of the screen. The interactive contents can be displayed on a screen in synchronization with the AV data, such as a movie title. For example, the mark-up document containing a specific actor or actress' personal history may be drawn from a data storage medium and displayed when the specific actor or actress appears on the screen while a movie title is reproduced.

US-A-2002/088011 discloses a system for providing enhanced DVD content for play across multiple user platforms wherein both DVD-video content and HTML content are recorded on a DVD disc as an example of the interactive DVD discussed above. The pre-characterising portion of the appended claims are based on this document.

However, some interactive content that can be displayed in an interactive mode with the help of mark-up documents may not be appropriate for minors to view.

According to the present invention there is provided a data storage medium, a method and an apparatus as set forth in the appended claims. Preferred features of the invention will be apparent from the dependent claims, and the description which follows.

Exemplary embodiments of the present invention provide a data storage medium on which mark-up documents are recorded to control in an interactive mode a display of interactive content inappropriate for minors. Also, the exemplary embodiments of the present invention provide a method and an apparatus for reproducing data from the data storage medium, wherein interactive content inappropriate for minors can be prevented from being viewed by minors.

Additional aspects and/or advantages of the invention will be set forth in part in the description which follows and, in part, will be obvious from the description, or may be learned by practice of the invention.

### Brief Description of the Drawings

These and/or other aspects and advantages of the invention will become apparent and more readily appreciated from the following description of the aspects of the present invention, taken in conjunction with the accompanying drawings of which:
FIG. 1 is a schematic diagram illustrating a reproduction system, according to an aspect of the present invention;
FIG. 2 is a block diagram of an apparatus to reproduce data, according to an aspect of the present invention; and
FIG. 3 is a diagram illustrating directories of data recorded on a DVD 300 on which the data is recorded, according to a first aspect of the present invention;
FIG. 4 is a diagram illustrating the directories of the data recorded on the DVD 300 on which the data is recorded, according to a second aspect of the present invention;
FIG. 5 is a diagram illustrating the directories of data recorded on the DVD 300 on which the data is recorded, according to a third aspect of the present invention;
FIG. 6 is a flowchart of a method to reproduce AV data in an interactive mode, according to an aspect of the present invention;
FIG. 7 is a flowchart of a method to reproduce AV data in the interactive mode, according to another aspect of the present invention;
FIG. 8 is a flowchart of a method to display a mark-up document, according to an aspect of the present invention; and
FIG. 9 is a flowchart of a method to reproduce AV data using the mark-up document, according to an aspect of the present invention.

### Best mode for carrying out the Invention

Reference will now be made in detail to the aspects of the present invention, examples of which are illustrated in the accompanying drawings, wherein like reference numerals refer to like elements throughout. The aspects are described below in order to explain the present invention by referring to the figures.

According to an aspect of the present invention, 'mark-up documents' includes all documents written in the mark-up language, such as HTML or XML, and documents where source codes written in a script language or Java is linked or inserted and even represents mark-up resource, such as files linked to a mark-up document. In other words, the mark-up document serves as an application program to reproduce AV data in an interactive mode and contains interactive contents to be displayed together with the AV data.

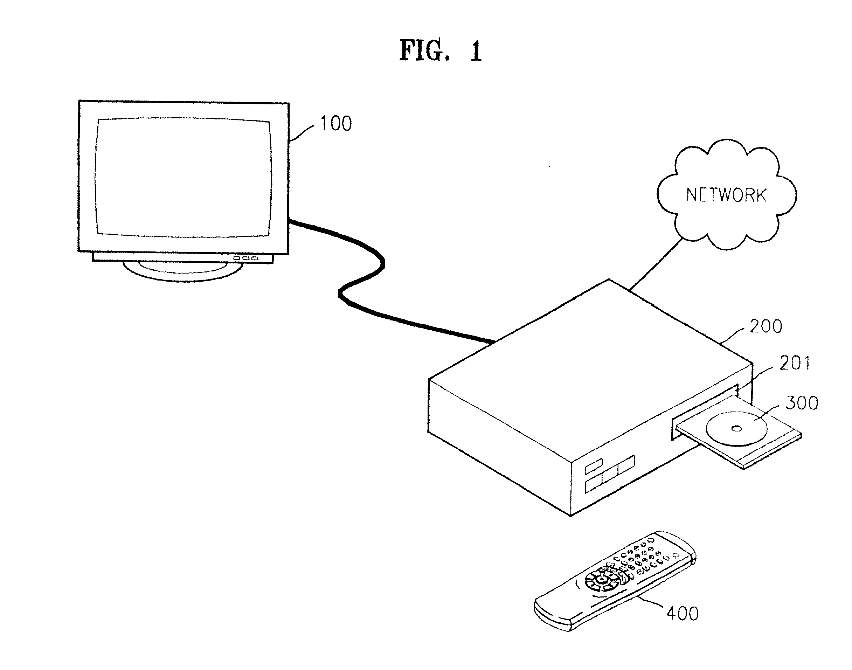

FIG. 1 is a schematic diagram illustrating a reproduction system, according to an aspect of the present invention. Referring to FIG. 1, the reproduction system includes a DVD 300, which is a data storage medium according to an aspect of the present invention, an apparatus 200 to reproduce data, a TV set 100, which is a display device according to an aspect of the present invention, and a remote controller 400, which is a user input device. The remote controller 400 receives a control command from a user and transmits the control command to the apparatus 200 to reproduce the data. The apparatus 200 to reproduce the data includes a DVD drive 201 to reproduce the data from the DVD 300. When the DVD 300 is loaded onto the DVD drive 201 and the user selects the interactive mode, the apparatus 200 to reproduce the data reproduces the AV data recorded on the DVD 300 in the interactive mode using the mark-up document corresponding to the AV data and transmits the reproduced AV data to the TV set 100. The TV set 100 displays a mark-up screen obtained using the mark-up document with an AV screen obtained by reproducing the AV data. The AV screen is embedded in the mark-up screen. Here, the interactive mode represents a display mode in which the AV data is reproduced, displayed in a display window defined by the mark-up document, i.e., a display mode in which the AV screen displays the AV data and is embedded in the mark-up screen. Here, the AV screen represents a screen displayed on the display device, i.e., the TV set 100, when reproducing the AV data, and the mark-up screen represents a screen displayed on the display device when interpreting the mark-up document. A screen displayed in an interactive mode is called an interactive screen. The interactive screen includes the AV screen and the mark-up screen. A video mode represents a conventional data reproduction mode defined by DVD-video standards, i.e., a mode in which only the AV screen obtained by reproducing the AV data is displayed. In an aspect of the present invention, the apparatus 200 supports both the interactive mode and the video mode.

The apparatus 200 provides a parental level setting button or an on-screen display menu that enables the user to set a parental level. In addition, the apparatus 200 can receive the data from and transmit the data to other devices through a network, such as the Internet.

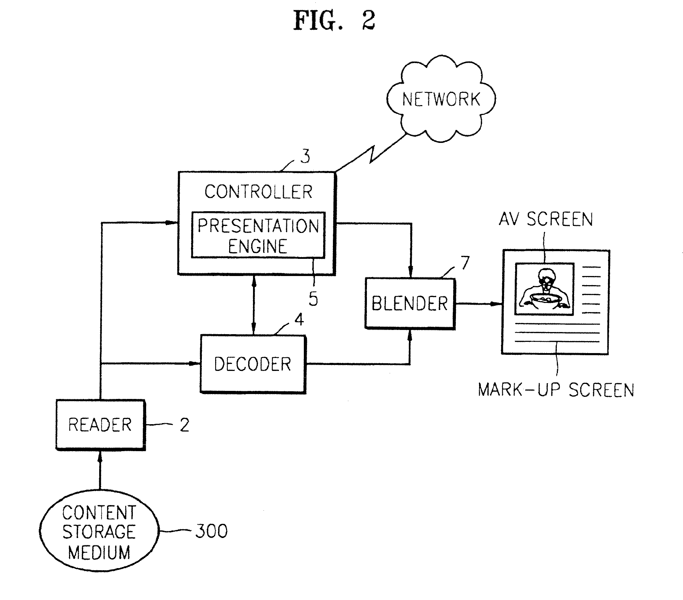

FIG. 2 is a block diagram of an example of the apparatus 200 to reproduce the data, according to an aspect of the present invention. Referring to FIG. 2, the apparatus 200 includes a reader 2, a controller 3, an AV decoder 4, and a blender 7. A presentation engine 5 is provided in the controller 3. An optical pickup (not shown) for reading the data from the DVD 300 by radiating laser beams on the DVD 300 is provided in the reader 2. The reader 2 controls the optical pickup in response to a control signal output by the controller 3 so that the optical pickup reads the AV data and the mark-up document from the DVD 300. The AV decoder 4 decodes the AV data read from the DVD 300. In a case where the AV data has been recorded on the DVD 300 according to the DVD-video standards, the AV decoder 4 decodes the AV data following the DVD-video standards.

From software's point of view, the presentation engine 5 in the controller 3 is an engine for interpreting and executing a mark-up language or a client interpretation program language, such as JavaScript or Java. The presentation engine 5 may further include various plugs-in. Files of various formats included in the mark-up document or linked to the mark-up document can be opened by such plugs-in. For example, Window Media Player may be called by the presentation engine 5 to reproduce Window Media Player AV data files. In addition, the presentation engine 5 can bring predetermined data, such as the mark-up documents, from other devices through the network.

The presentation engine 5 interprets the mark-up document read from the DVD 300 so as to reproduce the AV data recorded on the DVD 300 in the interactive mode. In other words, the presentation engine 5 identifies the parental level set by the user for the apparatus 200 and interprets the mark-up document in consideration of the parental level.

In an aspect according to the present invention, there are provided five different parental levels, i.e., G, PG, PG13, R, and NC-17, which are the same as those defined by the DVD-video standards for compatibility. The mark-up documents, according to an aspect of the present invention, are provided to reproduce the AV data recorded on the data storage medium according to the DVD-video standards in an interactive mode, and the mark-up documents are provided according to the parental levels for compatibility. The presentation engine 5 uses an application program interface (API) to identify the parental level set for the apparatus 200. The presentation engine 5, however, may use the API defined by conventional interactive DVD-video standards, i.e., InterActual API Specification. The example of the API is as follows.
1. Property
   ParentalLevel
2. Summary
   Return a current parental level value
3. Return values
   ECMASCript Number Signed 1 byte integer
   Parental level ranging from 1 to 8 where 1 = G, 2 = Reserved, 3 = PG, 4 =
   PG13, 5 = Reserved, 6 = R, 7 = NC-17, and 8 = Reserved

The user may set the parental level at any of 1, 3, 4, 6, and 7. The presentation engine 5 can identify the parental level set for the apparatus 200 to reproduce the data by using "ParentLevel" properties of the API.

The blender 7 blends the AV data stream with the interpreted mark-up document so that the AV data stream can be displayed in the display window defined by the mark-up document; in other words, the AV screen can be embedded in the mark-up document screen. Thereafter, the blender 7 outputs the result of the blending to the TV set 100.

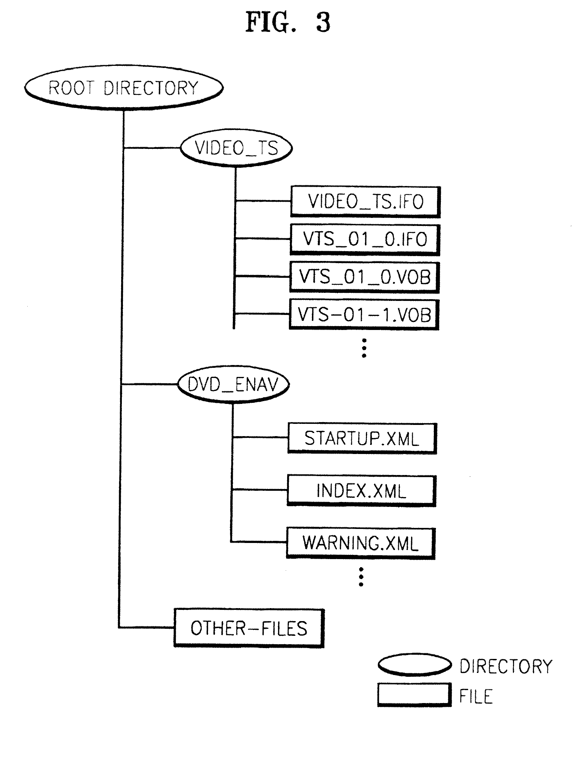

FIG. 3 is a diagram illustrating directories of data recorded on the DVD 300 on which data is recorded, according to a first aspect of the present invention. Referring to FIG. 3, a root directory includes a video directory VIDEO_TS in which the AV data is stored. In the video directory VIDEO_TS, a navigation file VIDEO_TS.IFO containing navigation information of all video title sets is stored. Then, a navigation file VTS_01_0.IFO containing the navigation information of a first video title set, and the AV data VTS_01_0.VOB, VTS_01_1.VOB, ..., constituting the video title set are recorded. Each of the plurality of the AV data VTS_01_0.VOB, VTS_01_1.VOB, ..., is a video title, i.e., a video object. Each video object VOB includes a video object unit VOBU, which is a package of a navigation pack, a video pack, and an audio pack. A detailed structure of VIDEO_TS has been disclosed in 'DVD-Video for Read Only Memory Disc 1.0' dealing with DVD-video standards.

An interactive directory DVD_ENAV is provided as a sub-directory of the root directory. In the interactive directory DVD_ENAV, mark-up documents for supporting an interactive mode are stored. In particular, in the interactive directory DVD_ENAV, a start-up document STARTUP.XML, and mark-up documents INDEX.XML and WARNING.XML for selectively showing a parental level are stored. In addition, other mark-up documents, i.e., files inserted into STARTUP.XML, INDEX.XML, and WARNING.XML, are also stored in the interactive directory DVD_ENAV.

The start-up document STARTUP. XML contains the parental level information and link information. In an aspect of the present invention, the parental level information is a parental level written in the start-up document STARTUP.XML, and the link information is the mark-up document information indicating whether the parental level set by the user is higher or lower than the parental level written in the start-up document STARTUP.XML. An example of the start-up document STARTUP.XML is as follows.

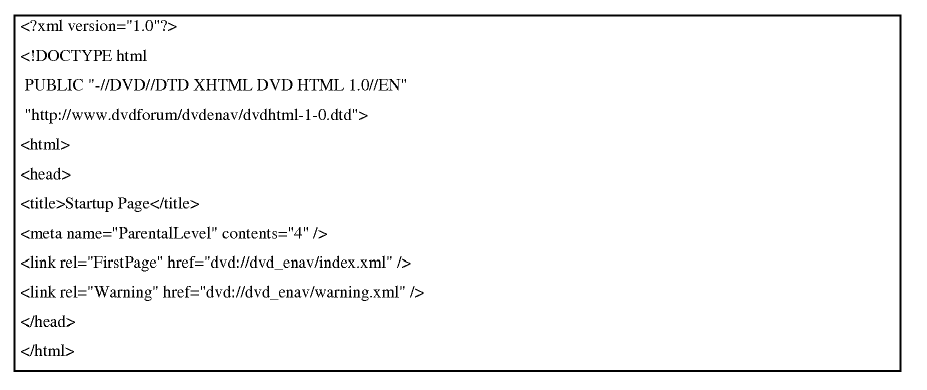

The start-up document STARTUP.XML contains meta-information <meta name="ParentalLevel" contents="4" /> concerning the parental level and the link information <link rel="FirstPage" href="dvd://dvd_enav/index.xml" /> <link rel="Warning" href="dvd://dvd_enav/warning.xml" />. According to the meta-information and the link information, WARNING.XML is displayed on the screen when the parental level set for the apparatus 200 to reproduce the data is 4 or below, and INDEX.XML is displayed on the screen when the parental level exceeds 4.

The presentation engine 5 identifies the parental level set in the apparatus 200 to reproduce the data using the API that has been described above and interprets mark-up documents using meta-information and link information written in a mark-up document designated as a start-up document.

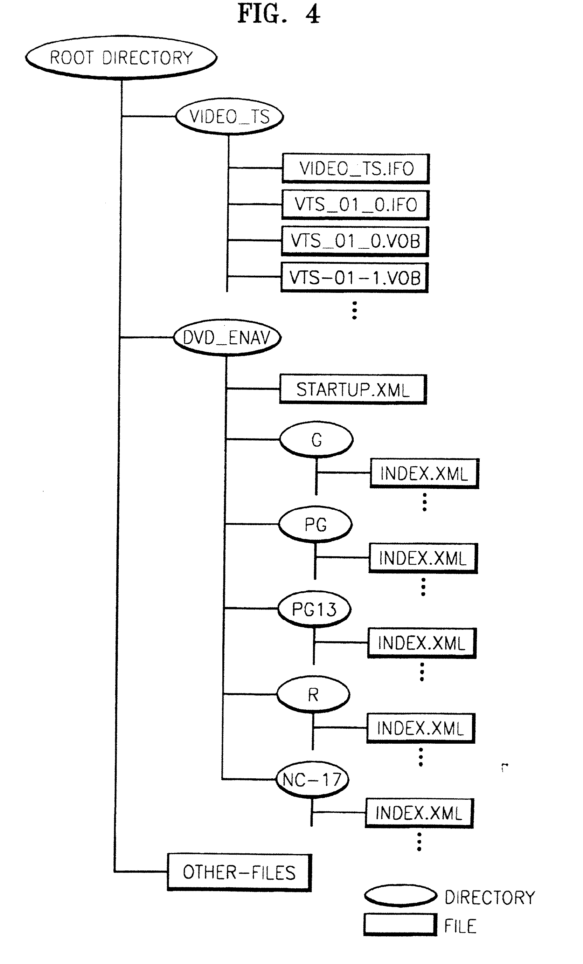

FIG. 4 is a diagram illustrating directories of the data recorded on the DVD 300, according to a second aspect of the present invention. Referring to FIG. 4, the root directory includes two sub-directories, i.e., a video directory VIDEO_TS where the AV data is stored and the interactive directory DVD_ENAV where the mark-up documents to support the interactive mode are stored. The video directory VIDEO_TS shown in FIG. 4 is the same as its counterpart shown in FIG. 3, and, thus, its description will be omitted.

In the interactive directory DVD_ENAV, a start-up document STARTUP.XML is stored. In addition, the interactive directory includes sub-directories G, PG, PG13, R, and NC-17 concerning different parental levels. Each of the sub-directories G, PG, PG13, R, and NC-17 contains a mark-up document INDEX.XML corresponding to the parental level. Furthermore, in the interactive directory DVD_ENAV, other mark-up documents, i.e., files inserted into STARTUP.XML or INDEX.XML, are also stored.

In the start-up document STARTUP.XML, link information is stored. In an aspect according to the present invention, the link information includes mark-up document information indicating the parental level set by the user for the apparatus 200 to reproduce the data. An example of the start-up document STARTUP.XML is as follows.

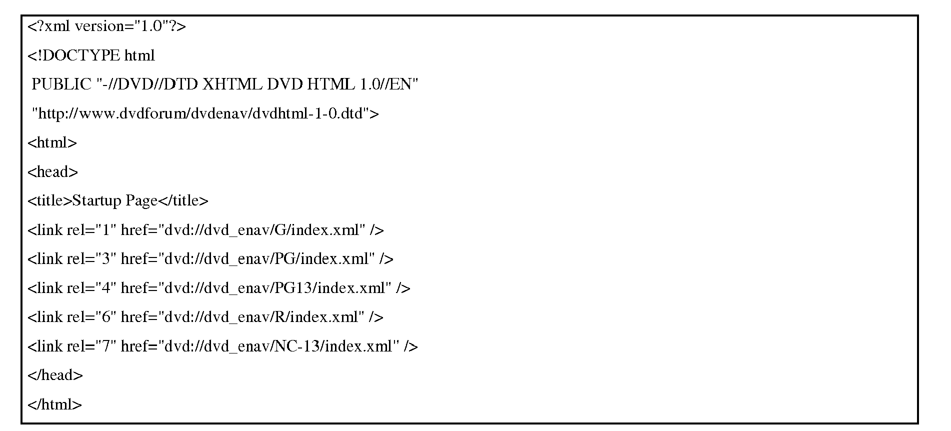

According to the link information stored in the start-up document STARTUP.XML, INDEX.XML stored in the sub-directory G is displayed when the parental level set for the apparatus 200 to reproduce the data is 1, INDEX.XML stored in the sub-directory PG is displayed when the parental level set for the apparatus 200 to reproduce the data is 3, INDEX.XML stored in the sub-directory PG13 is displayed when the parental level set for the apparatus 200 to reproduce the data is 4, INDEX.XML stored in the sub-directory R is displayed when the parental level set for the apparatus 200 to reproduce the data is 6, and INDEX.XML stored in the sub-directory NC-13 is displayed when the parental level set for the apparatus 200 to reproduce the data is 7.

The presentation engine 5 identifies the parental level set for the apparatus 200 to reproduce the data using an API that has been described above and interprets the mark-up documents using the meta-information and the link information written in the mark-up document designated as a start-up document.

Alternatively, in a case where there are two or more start-up pages provided for each parental level, the start-up pages can be stored in the same directory but have different file names. In this case, the start-up document STARTUP.XML may have the following format and structure.

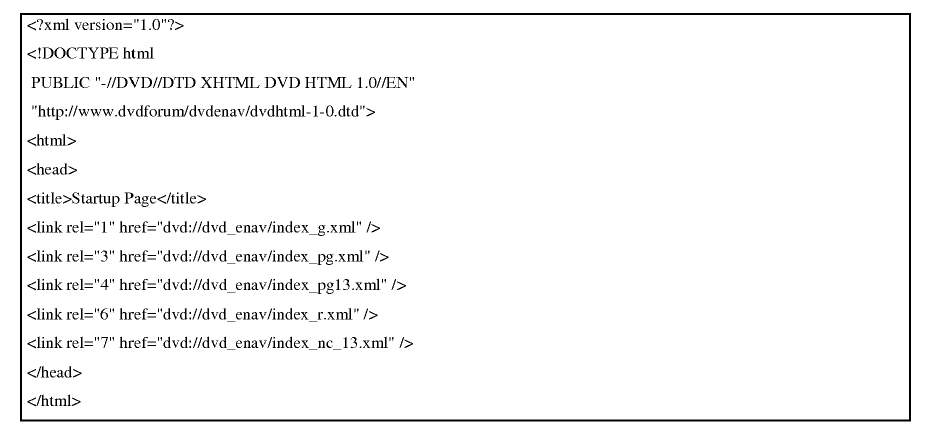

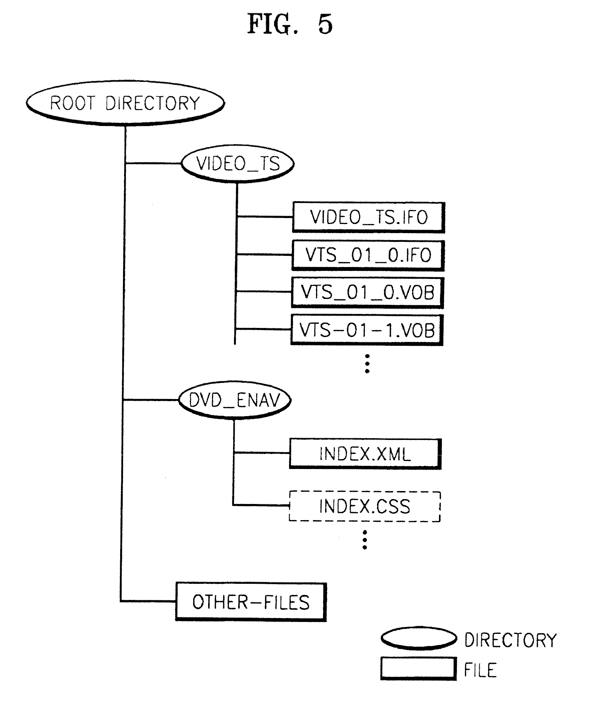

FIG. 5 is a diagram illustrating the directories of the data recorded on the DVD 300, according to a third aspect of the present invention. Referring to FIG. 5, the root directory includes two sub-directories, i.e., a video directory VIDEO_TS where the AV data is stored and the interactive directory DVD_ENAV where the mark-up documents to support the interactive mode are stored. The video directory VIDEO_TS shown in FIG. 5 is the same as its counterpart shown in FIG. 3, and, thus, a description thereof will be omitted.

In the interactive directory DVD_ENAV, the mark-up document INDEX.XML is stored. In addition, a cascading style sheet (CSS) file indicating the mark-up document INDEX.XML corresponding to the parental level set for the apparatus 200 to reproduce the data is also stored in the interactive directory DVD_ENAV. The CSS file may be included in the mark-up document rather than to be generated separately from the mark-up document.

In an aspect according to the present invention, the CSS file contains display rule information. The display rule information is written according to a "@media rule" style defined by CSS standards. An example of "@media rule" defining display rules for target media is as follows.

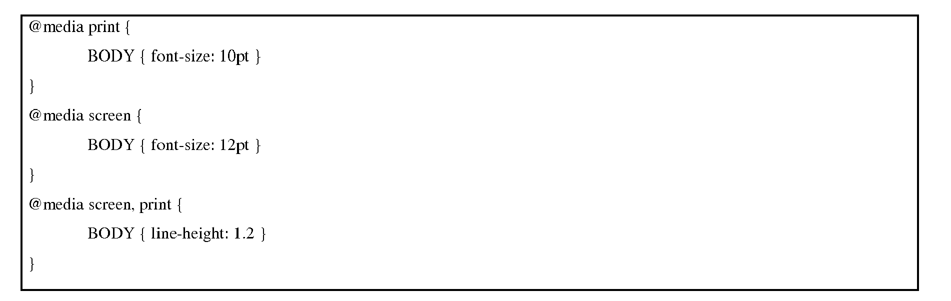

According to the above "@media rule", the target media is printed out having a font size of 10 and a line space of 1.2 and is displayed on the screen having the font size of 12 and the line space of 1.2.

In an aspect of the present invention, the display rule information written according to CSS standards is as follows.

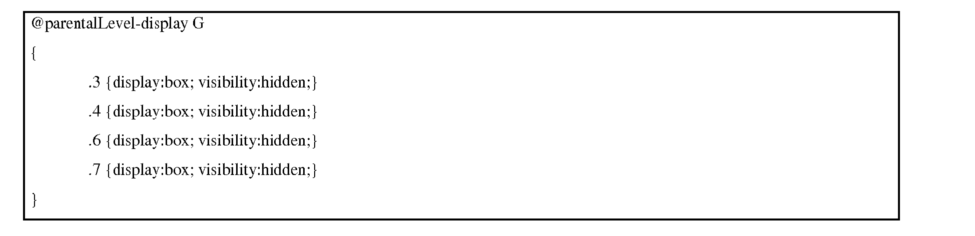

Here, @parentalLevel-display indicates that an element having a "class" attribute value of 3, 4, 6, or 7 sets parameters "display" and "visibility" as "box" and "hidden", respectively, when the parental level is G. In particular, if the parameter "display" is set as "box", box regions are generated and continue to exist even when the box regions are not physically seen. If the parameter "display" is set as "none", generation of all the boxes is banned so that the arrangement of the mark-up documents is more likely to get messed up because even unseen box regions can help arrange the mark-up documents. In other words, by setting the parameter "display" as "box", the mark-up documents can be well arranged. The parameter "visibility" is used to determine whether or not such generated box regions are to be seen.

An example of the mark-up document INDEX.XML including the display rule information written according to CSS standards is as follows.

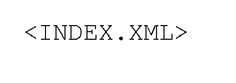

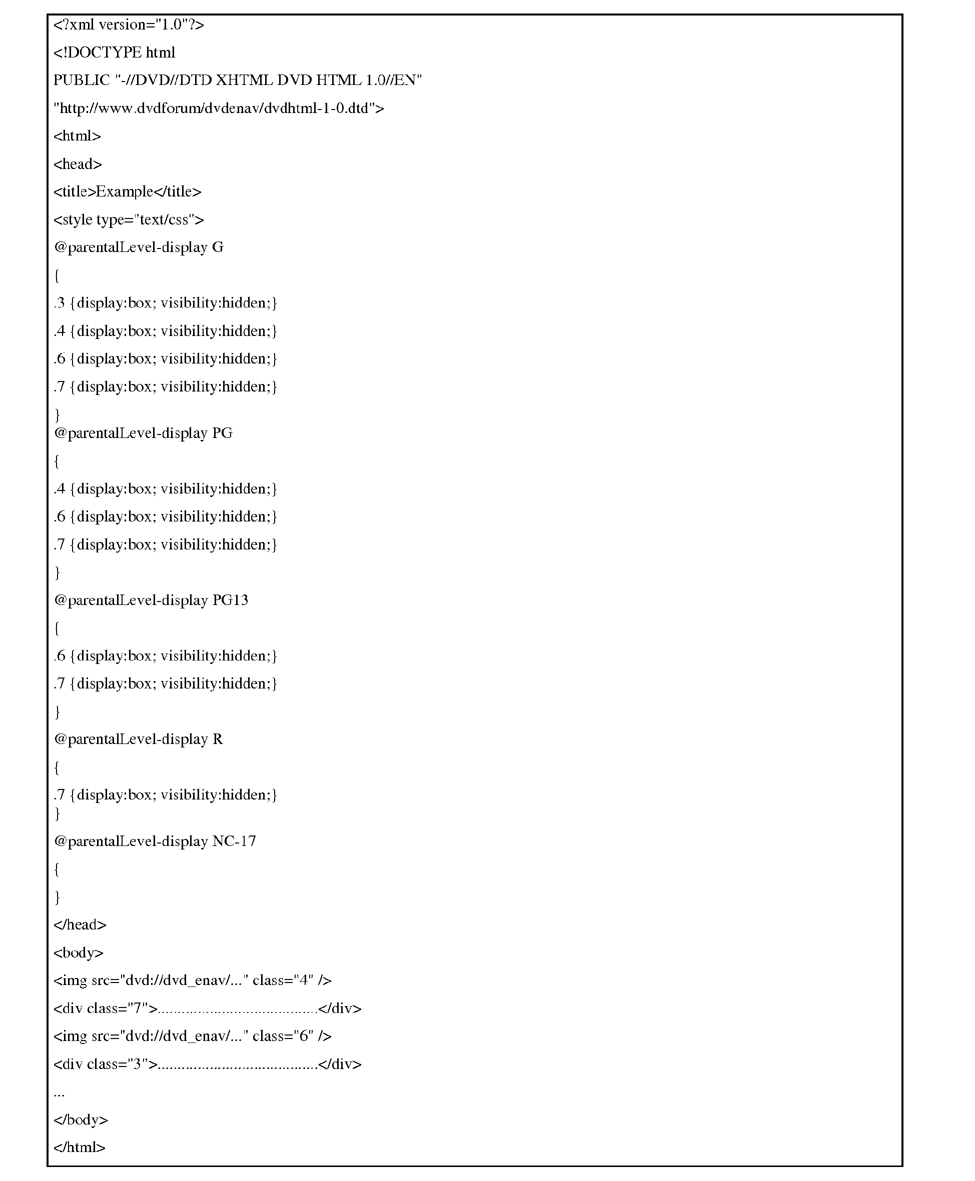

As shown in the above example, the parental level value is allotted to each element in the "body" of the mark-up document INDEX.XML as a "class" attribute value. Whether to display each element is determined based upon the display rule information @parentalLevel-display.

An example of the mark-up document INDEX.XML and its display rule information, which is provided as an individual single following CSS standards, i.e., INDEX.CSS, is as follows.

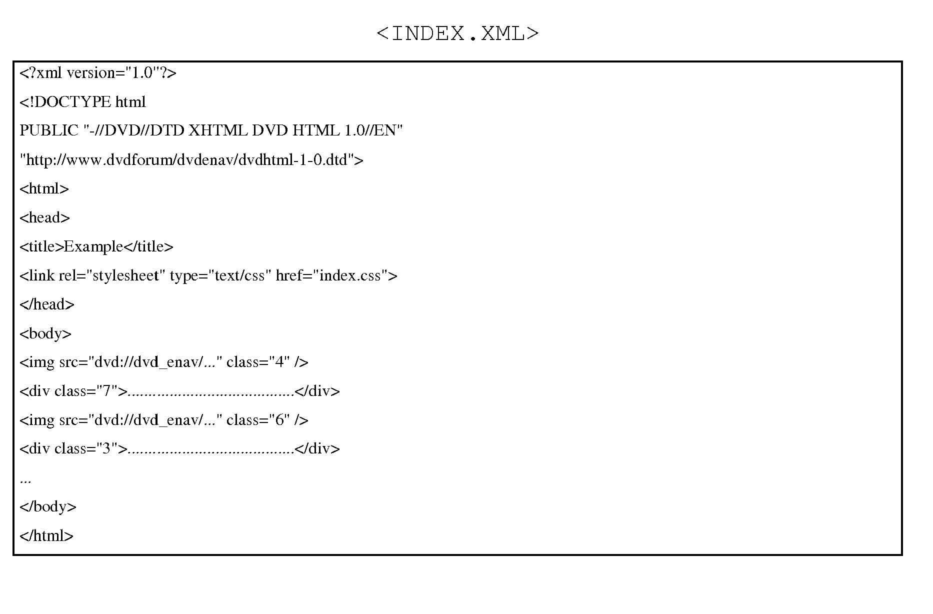

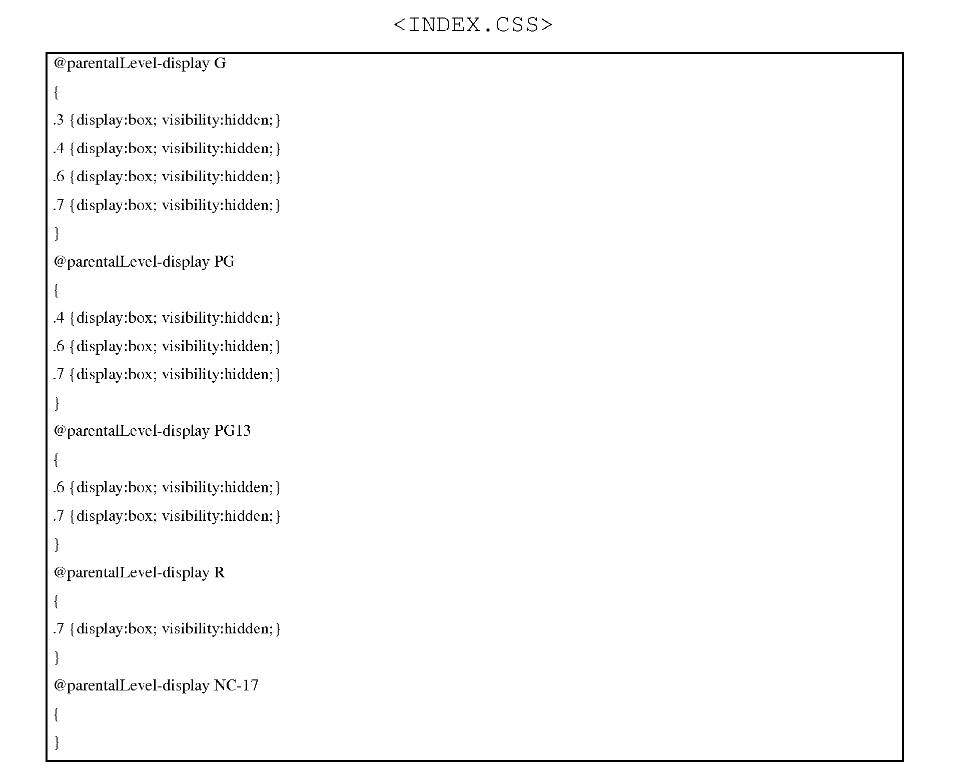

Alternatively, the mark-up document INDEX.XML may be written using a script language, such as JavaScript, so as to represent a document appropriate for the corresponding parental level. The script language, which is a programming language, may be used in various manners. An example of the mark-up document INDEX.XML using the script language is as follows.

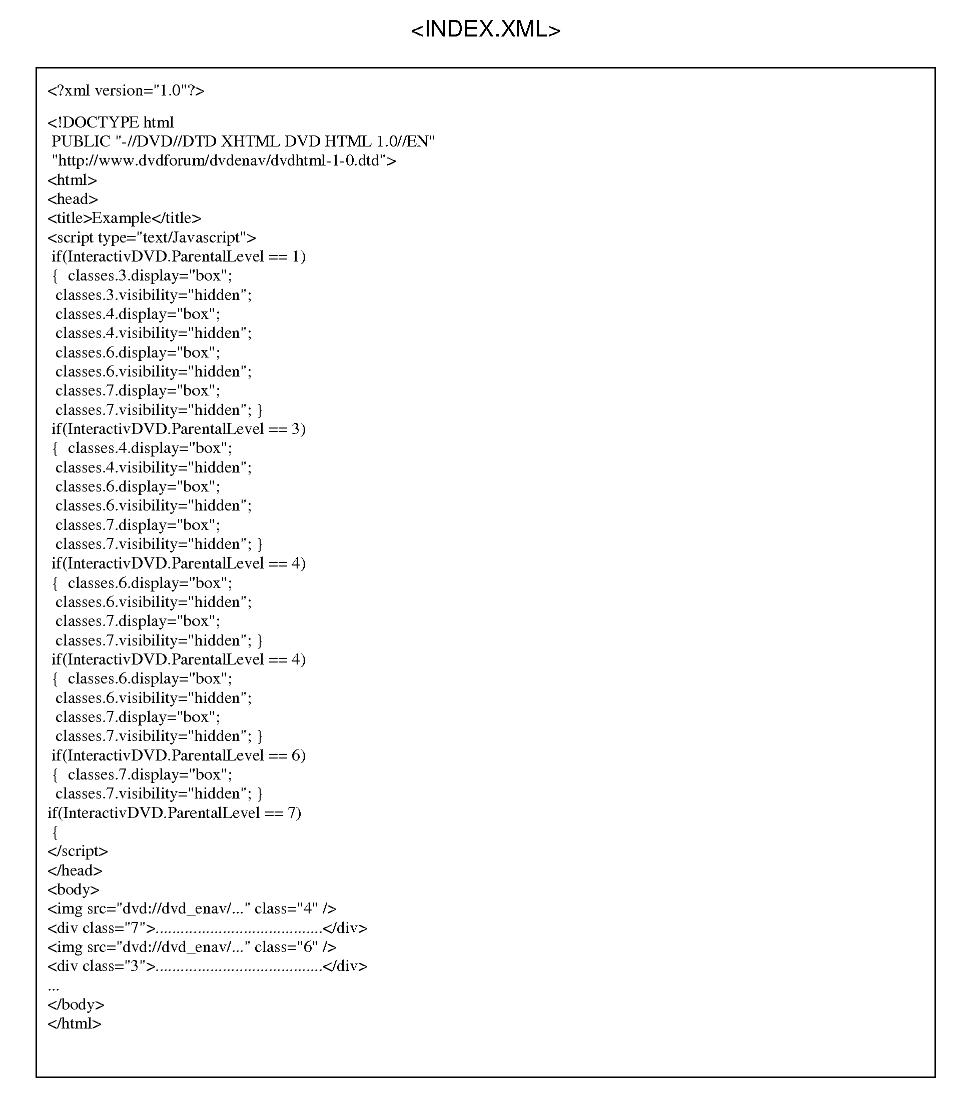

In the above example of the mark-up document INDEX.XML, "ParentalLevel" that has been described above is used a property for reading a currently set parental level, and ways to represent documents appropriate for their parental levels are written in the script language using simple if-sentences.

The if-sentences are written so that the mark-up document INDEX.XML can be linked to the CSS file and/or the JavaScript file provided separately.

Hereinafter, the method to reproduce the data in the interactive mode, according to an aspect of the present invention, will be described in greater detail based upon the above-described structures of the reproduction system and data written on the DVD 300.

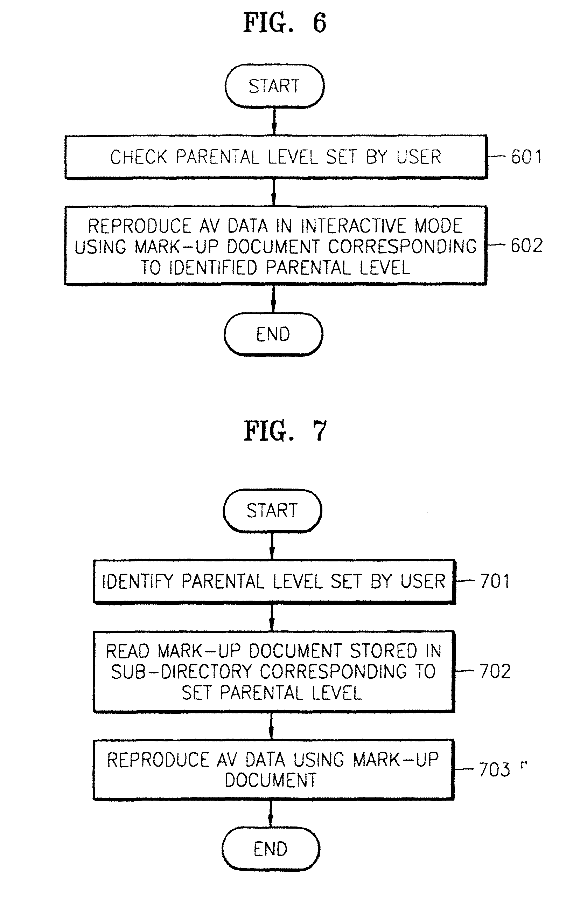

FIG. 6 is a flowchart of the method to reproduce the data in the interactive mode, according to an aspect of the present invention. Referring to FIG. 6, when the interactive mode is selected, at operation 601, the apparatus 200 to reproduce the data identifies the parental level set by the user. Thereafter, at operation 602, the apparatus 200 to reproduce the data reproduces the AV data in the interactive mode using the mark-up document corresponding to the identified parental level.

More specifically, at operation 602, the apparatus 200 to reproduce the data identifies the parental level written in the mark-up document designated as the start-up document and compares the parental level recorded in the mark-up document with the parental level identified at operation 601. If the parental level written in the start-up document is not higher than the parental level identified at operation 601, the AV data is reproduced in the interactive mode using the mark-up document with a warning message indicating that the interactive content corresponding to the AV data cannot be displayed. On the other hand, if the parental level written in the start-up document is higher than the parental level identified at operation 601, the AV data is reproduced in the interactive mode using the mark-up document containing the interactive content to the AV data.

FIG. 7 is a flowchart of a method to reproduce the AV data in the interactive mode, according to an aspect of the present invention.

Referring to FIG. 7, at operation 701, the apparatus 200 to reproduce the data identifies the parental level set by the user. Thereafter, the mark-up document stored in the sub-directory corresponding to the parental level identified at operation 701 among the plurality of sub-directories of the interactive directory is read at operation 702. At operation 703, the AV data is reproduced in the interactive mode using the mark-up document.

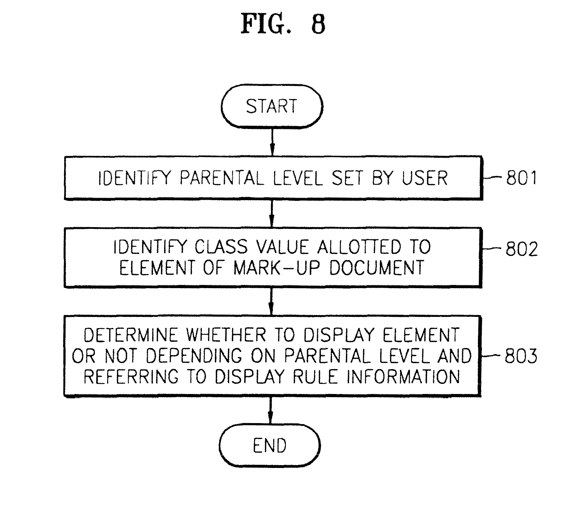

FIG. 8 is the flowchart of a method to display a mark-up document, according to an aspect of the present invention. Referring to FIG. 8, at operation 801, the apparatus 200 to reproduce the data identifies a parental level set by a user. Thereafter, at operation 802, the apparatus 200 to reproduce the data identifies the class value allotted to the predetermined element of the mark-up document. At operation 803, the apparatus 200 to reproduce the data determines whether to display the predetermined element based upon the parental level identified at operation 801 and the class value allotted to the predetermined element and then displays the predetermined element.

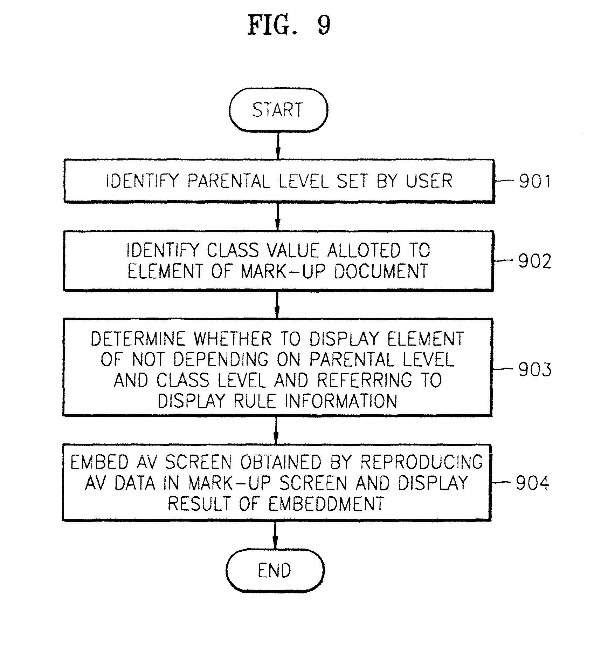

FIG. 9 is a flowchart of the method to reproduce the AV data in the interactive mode using the mark-up document, according to an aspect of the present invention. Referring to FIG. 9, at operation 901, the apparatus 200 to reproduce the data identifies the parental level set by the user. Thereafter, the apparatus 200 to reproduce the data identifies the class value allotted to the predetermined element of the mark-up document at operation 902. At operation 903, the apparatus 200 to reproduce the data determines whether to display the predetermined element based upon the parental level identified at operation 901 and the class value and with reference to display the rule information at operation 903. The apparatus 200 to reproduce the data embeds the AV screen obtained by reproducing the AV data in the mark-up screen and displays a result of the embedment at operation 904.

As described above, the present invention provides a data storage medium on which a mark-up document is recorded so that whether to display interactive content inappropriate for minors or not can be controlled in an interactive mode, and a method and a system to reproduce data from the data storage medium. Accordingly, it is possible to control whether to display such inappropriate interactive content or not according to DVD-video standards. In addition, according to an aspect of the present invention, elements of the mark-up document are graded so that the mark-up document can be displayed in different ways depending on an age of a viewer.

Although a few preferred embodiments have been shown and described, it will be appreciated by those skilled in the art that various changes and modifications might be made without departing from the scope of the invention, as defined in the appended claims.

## Claims

1. A data storage medium (300), comprising:
AV data; and
a mark-up document to reproduce the AV data in an interactive mode;
**characterised by**:
display rule information displaying the mark-up document to correspond to a set parental level.

2. The data storage medium (300) of claim 1, wherein the display rule information comprises information indicating whether to display elements of the mark-up document corresponding to at least two different parental levels.

3. The data storage medium (300) of claim 1, wherein the display rule information is written according to cascading style sheet (CSS) rules.

4. The data storage medium (300) of claim 1, wherein a class value is allotted to one of the elements of the mark-up document, and the display rule information comprises information indicating whether to display an element to which the class value is allotted.

5. The data storage medium (300) of claim 4, wherein the display rule information is written in the form of a CSS file.

6. The data storage medium (300) of claim 1, wherein the AV data is DVD-video data, and the parental level meets DVD-video standards.

7. The data storage medium (300) of claim 4, wherein the display rule information is written in a script language.

8. The data storage medium (300) of claim 7, wherein the display rule information written in the script language is linked to a script file written in a script language or a CSS file.

9. A method to display a mark-up document according to a parental level,
**characterised by**:
identifying a predetermined class value of an element of a mark-up document; and
determining whether to display the predetermined value of the element depending on the predetermined class value based on display rule information.

10. The method of claim 9, further comprising:
embedding an AV screen obtained by reproducing AV data in a mark-up screen obtained as the result of the determination and displaying the result of the embedment.

11. The method of claim 9, wherein the display rule information is written according to CSS rules.

12. The method of claim 9, wherein the display rule information is written in the form of a CSS file.

13. An apparatus to reproduce AV data of a data storage medium (300) in an interactive mode using a mark-up document, **characterised by**:
a reader (2) reading the mark-up document and AV data from the data storage medium (300);
an AV decoder (4) decoding the AV data;
a presentation engine (5) identifying a predetermined value of an element of the mark-up document and determining whether to display the element depending on the predetermined value and to display rule information; and
a blender (7) blending a mark-up document interpreted by the presentation engine (5) and an AV screen obtained by reproducing the AV data.

14. The apparatus of claim 13, wherein the display rule information is written according to CSS rules.

15. The apparatus of claim 13, wherein the display rule information is written in a form of a CSS file.
